# EUROPEAN PATENT SPECIFICATION

(11) **EP 4 078 536 B1**
(45) Date of publication and mention of the grant of the patent: **18.06.2025**
(21) Application number: 19828722.9
(22) Date of filing: 18.12.2019
(51) Int. Cl.: G06T 19/00, G06T 7/30

(54) **ENABLING 3D MODELLING OF AN OBJECT**
ERMÖGLICHUNG EINER 3D-MODELLIERUNG EINES OBJEKTS
POSSIBILISATION DE MODÉLISATION 3D D'UN OBJET

(43) Date of publication of application: 26.10.2022
(73) Proprietor: Telefonaktiebolaget LM Ericsson (publ), 164 83 Stockholm (SE)
(72) Inventor: WIRÉN, Richard, 20250 Turku (FI); GRANCHAROV, Volodya, 171 67 Solna (SE)
(74) Representative: Ericsson
(86) International application number: PCT/EP2019/086107
(87) International publication number: WO 2021/121588

(56) References cited:
- US-B2- 10 192 354
- DANIEL KURZ ET AL: "Inertial sensor-aligned visual feature descriptors", CVPR 2011, 1 June 2011 (2011-06-01), pages 161 - 166, XP055011362, ISBN: 978-1-45-770394-2, DOI: 10.1109/CVPR.2011.5995339
- "Computer Vision Metrics. Survey, Taxonomy, and Analysis", 1 January 2014, SPRINGER, US, ISBN: 978-1-4302-5929-9, article SCOTT KRIG: "Local Feature Design Concepts, Classification, and Learning", pages: 131 - 189, XP055506091, DOI: 10.1007/978-1-4302-5930-5_4
- "Computer Vision Metrics. Survey, Taxonomy, and Analysis", 26 May 2014, SPRINGER, US, ISBN: 978-1-4302-5929-9, article SCOTT KRIG: "Interest Point Detector and Feature Descriptor Survey", pages: 217 - 282, XP055241490, DOI: 10.1007/978-1-4302-5930-5_6

## Description

### TECHNICAL FIELD

The present disclosure relates to methods and devices of enabling or performing 3D modelling of objects.

### BACKGROUND

Nowadays, three-dimensional (3D) modelling is commonly used for creating a digital representation of an object from visual data such as captured images.

For instance, in the case of telecommunication equipment, a site such as a cell tower comprising antennae and electronic communications equipment being mounted on the cell tower is typically remotely located and further difficult to access for an operator or maintenance personnel.

Thus, it is highly useful for purposes such as e.g. monitoring, maintenance and planning if a digital representation can be created of the cell tower, and even of individual components of the cell tower.

This may be created by having for instance an unmanned aerial vehicle (UAV), commonly referred to as a drone, circle the tower and capture images from which so called point clouds are extracted such that the digital representation of the cell tower can be created. The Patent US 10 192 354 B2 (TERRY ET AL.), 29 January 2019, discloses such a digital representation construction technique.

Further, when structural changes are made to the cell tower, such as addition of one or more antennae, the created 3D model needs to be updated. However, telecommunication equipment in the form of for instance antennae often have a similar appearance even if the antennae are of different brands and belong to different operators in the same site. This makes it difficult to distinguish one antenna from another upon creating a new digital representation or upon updating an existing digital representation from the extracted cloud points of similar images.

This may be mitigated by exploiting details in surroundings of the radio tower. However, the surroundings typically changes, for instance for seasonal reasons, which has as an effect that surroundings of the digital representation to be created or updated is completely different from the background of the currently captured images utilized for performing the creation of a new digital representation or the update of an existing digital representation.

### SUMMARY

An objective is to solve, or at least mitigate, this problem in the art and thus to provide an improved method of enabling or performing 3D modelling of an object.

This objective is attained in a first aspect by a method performed by a device enabling 3D modelling of a telecommunication equipment as set out in claim 1.

This objective is attained in a second aspect by a device configured to enable 3D modelling of a telecommunication equipment as set out in claim 5.

This objective is attained in a third aspect by a method performed by a device of performing 3D modelling of a telecommunication equipment as set out in claim 2.

This objective is attained in a fourth aspect by a device configured to perform 3D modelling of a telecommunication equipment as set out in claim 12.

A device such as for instance a UAV may be used e.g. circle around a cell tower being equipped with a group of antennae. As the UAV circles around the cell tower, it captures images of the antennae from which keypoints subsequently can be extracted and matched to each other in order to form a point cloud serving as a basis for a digital representation of the cell tower.

In addition to capturing images (or video), the UAV acquires frequency spectrum information using radio frequency scanning, the acquired frequency spectrum information indicating which block of the frequency spectrum has been assigned to the respective antenna.

This is advantageous, since for every captured image, the UAV will in addition to the image data also have information indicating the frequency spectrum employed by each antenna.

Subsequently, when keypoints are extracted from the images for matching in order to form point clouds from which a 3D representation of the antennae is created, the frequency spectrum information of each set of keypoints are compared, and if the frequency spectrum information indicates that the keypoints pertain to images captured of different antennae, no matching is performed.

If on the other hand the frequency spectrum information indicates that the keypoints pertain to images captured of the same antennae, the sets of keypoints are matched to each other and it the matching is successful, a 3D representation of the antenna is created utilizing point clouds formed from the successfully matching keypoints.

Advantageously, false matches are avoided, which otherwise ultimately would have resulted in an incorrect 3D representation. Further, if the frequency spectrum information of different sets of keypoints does not correspond no attempt to perform keypoint matching will be undertaken, which saves a huge amount of processing power.

Further embodiments will be discussed in the following.

Generally, all terms used in the claims are to be interpreted according to their ordinary meaning in the technical field, unless explicitly defined otherwise herein.

### BRIEF DESCRIPTION OF THE DRAWINGS

Aspects and embodiments are now described, by way of example, with reference to the accompanying drawings, in which:
Figure 1 illustrates three 2D images of telecommunication equipment being merged into a 3D representation of the telecommunication equipment;
Figure 2 illustrates an image of a cell tower comprising a plurality of antennae;
Figure 3 illustrates an embodiment of a method of a device configured to enable 3D modelling of an object;
Figure 4 illustrates a flowchart of a method of a device configured to enable 3D modelling of an object according to an embodiment;
Figure 5 illustrates a flowchart of a method of a device configured to create a 3D model of an object according to an embodiment;
Figure 6 illustrates a flowchart of a method of two devices interacting to create a 3D model of an object according to an embodiment;
Figure 7 illustrates a flowchart of a method of two devices interacting to create a 3D model of an object according to another embodiment;
Figure 8 illustrates a device configured to enable 3D modelling of an object according to an embodiment; and
Figure 9 illustrates a device configured to create a 3D model of an object according to an embodiment.

### DETAILED DESCRIPTION

The aspects of the present invention will now be described more fully hereinafter with reference to the accompanying drawings, in which certain embodiments of the invention are shown.

These aspects may, however, be embodied in many different forms and should not be construed as limiting; rather, these embodiments are provided by way of example so that this disclosure will be thorough and complete, and to fully convey the scope of the invention, as set out in the appended patent claims, to those skilled in the art. Like numbers refer to like elements throughout the description.

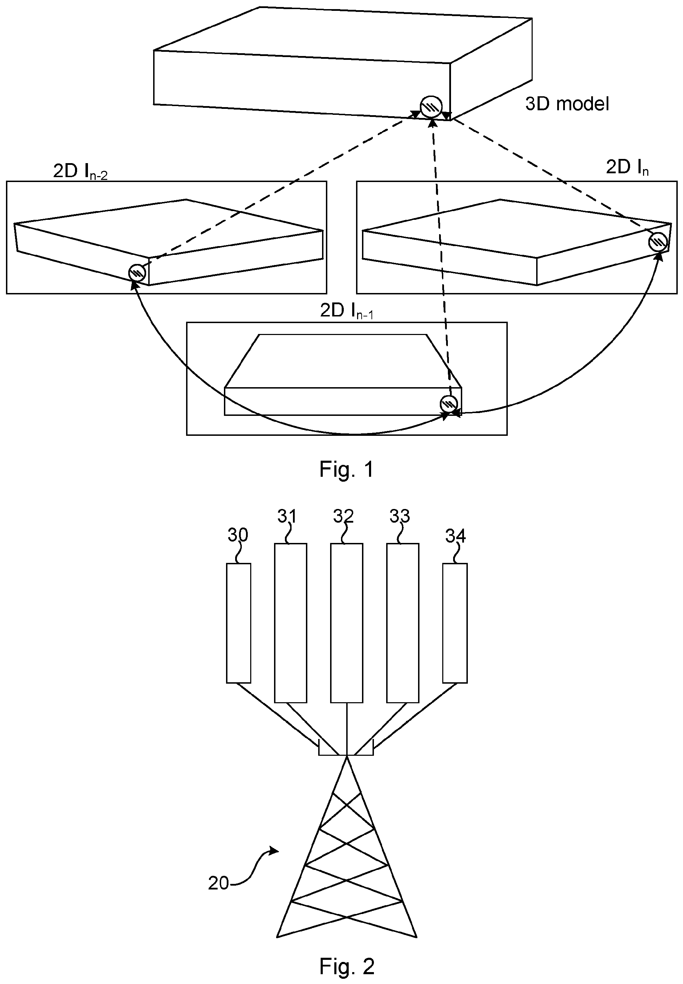

Figure 1 illustrates three two-dimensional (2D) images Iₙ, Iₙ₋₁, Iₙ₋₂ of telecommunication equipment in the form of a baseband unit (BBU) being captured from three different camera poses. Any appropriate device may be used for capturing the images, such as a smart phone. From the three 2D images, a 3D representation of the BBU is created.

This is typically performed in the art by extracting distinct features - so called keypoints, sometime also referred to as interest points - from the object for which the 3D representation is to be created, for instance corners, logotypes, lines, etc. Correspondence between these extracted keypoints is established across the images which allows for estimation of depth of a scene based on triangulation.

Point clouds are formed from the extracted keypoints from which the 3D representation of the BBU is created. Commonly used algorithms include maximally stable extremal regions (MSER), speeded up robust feature (SURF) and scale-invariant feature transform (SIFT).

The approach of creating a 3D representation of an object or scene as described with reference to Figure 1 relies on three assumptions: A) the object/scene has sufficient amount of distinct structure such that keypoints can be extracted, B) different parts of the object/scene in an image have different visual appearance and can be correctly matched to a corresponding area in a neighbouring image, and C) the object/scene is static, i.e., there are no moving elements and drastic changes that affect large visual areas.

Figure 2 illustrates an image of a cell tower 20 comprising a plurality of antennae 30-34. In such a scenario, the above-stated three assumptions are challenged.

As previously mentioned, telecommunication equipment in the form of for instance antennae often have a similar appearance even if the antennae are of different brands and belong to different operators in the same site.

This makes it difficult to distinguish one antenna from another upon creating a new digital representation or updating an available digital representation since keypoints are difficult to distinguish and may be incorrectly matched, thereby violating condition B.

This may be mitigated by exploiting details in surroundings of the radio tower. However, the surroundings typically change, for instance for seasonal reasons, which has as an effect that surroundings of the digital representation to be updated is completely different from the background of the currently captured images utilized for performing the update. Further, the surroundings may lack useful keypoints. Hence, conditions A and C are violated.

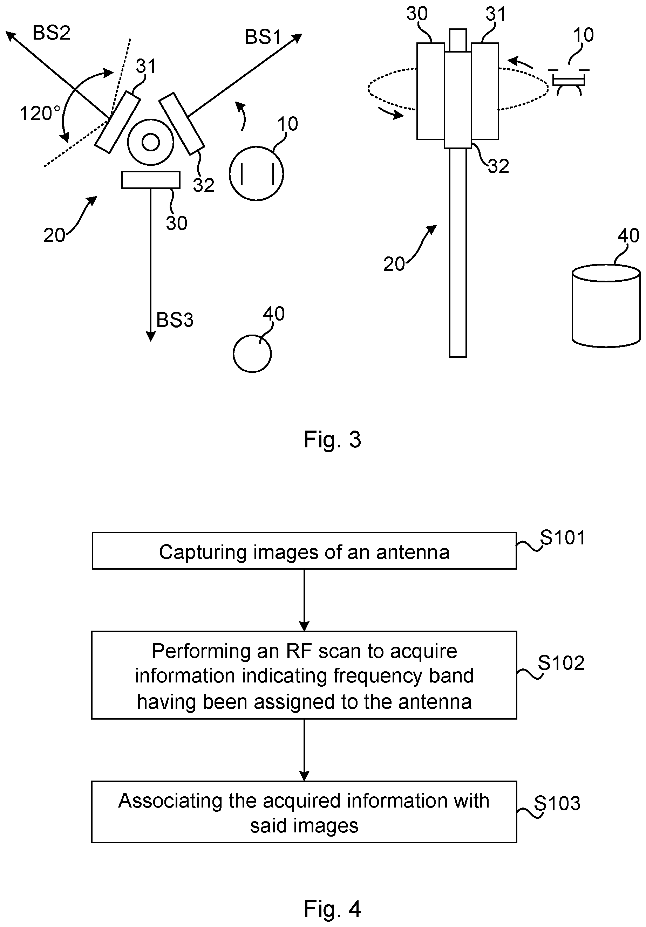

Figure 3 illustrates an embodiment of a method of a device configured to enable 3D modelling of an object, such as telecommunication equipment. In this exemplifying embodiment, the device is embodied in the form of a UAV and the object is embodied in the form of an antenna.

Reference will further by made to Figure 4 illustrating a flowchart of a method of a device configured to enable 3D modelling of an object.

On a right-hand side of Figure 3, it is shown in a side view that an UAV 10 circling around a cell tower 20 being equipped with three antennae 30, 31, 32. As the UAV 10 circles around the cell tower 20, it captures images of the antennae from which keypoints subsequently can be extracted and matched to each other in order to form point clouds serving as a basis for a digital representation.

However, in this embodiment, as illustrated on a left-hand side of Figure 3 showing a top view of the cell tower 20 and the three antennae 30, 31, 32, where the UAV 10 circles the cell tower 20 in a counter-clockwise direction, the UAV 10 will in addition to step S101 of acquiring visual representations of the antennas 30, 31, 32 by capturing images (or video) further in step S102 acquire frequency spectrum information using radio frequency (RF) scanning, the acquired frequency spectrum information indicating which block of the frequency spectrum (referred to in the following as BS) has been assigned to the respective antenna 30, 31, 32.

This is advantageous, since for every captured image, the UAV 10 will in addition to the image data also have information indicating the BS of each antenna 30, 31, 32. That is, for an image captured of the first antenna 30, a corresponding piece of BS information (BS1) is associated with the image in step S103. Similarly, BS2 is associated with an image captured of the second antenna 31, while BS3 is associated with an image captured of the third antenna 32.

In practice, BS1 may e.g. indicate a 713-723 MHz band, BS2 may indicate a 1910-1915 MHz band, while BS3 may indicate a 1915-1920 MHz band. It may be envisaged that that each frequency band is encoded into a particular index number and that a look-up table is used to decode a particular index number into a frequency band; in this example:

| BSn | Band (MHz) |
|---|---|
| 1 | 713-723 |
| 2 | 1910-1915 |
| 3 | 1915-1920 |

It is noted that this is for illustrative purposes only, and in practice, far more frequency bands are available.

Hence, even if at a later stage when the 3D modelling is undertaken, keypoints are extracted from the captured images and a keypoint of an image capturing first antenna 30 is identical to a keypoint of another image capturing second antenna 31 thus potentially resulting in the previously discussed incorrect keypoint matching; this embodiment also acquires the BS information and associates it to each captured image, implying that two more or less identical keypoints pertaining to different antennae may be distinguished from each other by means of the differing BS information for the respective keypoint.

As is understood, the 3D modelling is typically undertaken at for instance a computing device such as a server 40 having far more processing power than the UAV 10.

Thus, keypoint matching is greatly improved, which in its turn greatly improves the point clouds created from the matching keypoints. Ultimately, the 3D representation based on the point clouds will be far more accurate.

In a further advantageous embodiment, passive RF scan is utilized by the UAV 10 to acquire the BS information. Hence, in contrast to an active RF scan, the UAV 10 will not transmit a probe request to the antennae 30, 31, 32 and await a probe response, but will simply wait for the respective antenna to send the information. Advantageously, with the passive scan, the UAV is not required to transmit the probe request to the respective antenna, but will receive the information once the respective antenna transmits the information. This will consume less energy at the UAV as compared to if an active scan would be performed.

The BS information indicating a licensed spectrum block having been assigned to the respective antenna 30,31, 32 is different for different operators, a first operator is assigned a first block, while a second operator is assigned a second block. Further, equipment of different radio access technologies (RATs) will have different BSs, even it belongs to the same operator. That is, Long-Term Evolution (LTE) equipment has a different BS than equipment operating under Global System for Mobile Communications (GSM), while both LTE and GSM equipment have a different BS than Wideband Code Division Multiple Access (WCDMA) equipment.

In a further embodiment, information indicating pose - i.e. position and orientation - of the UAV 10 is associated with each captured image. Such information may thus be taken into account when extracting keypoints from two or more images of an object taken from different UAV camera poses, thereby aligning the images with each other before any keypoints are extracted.

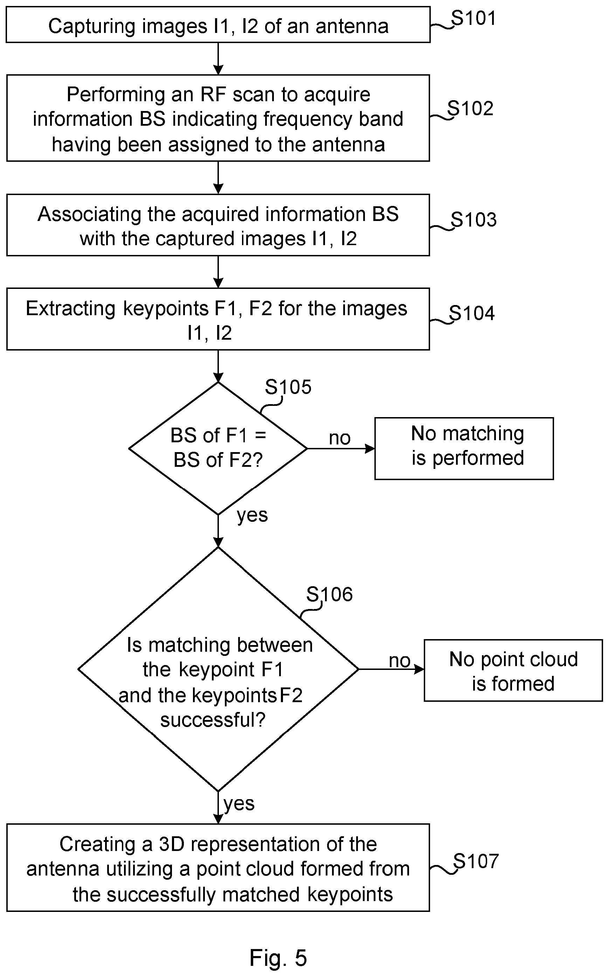

With reference to Figures 3 and 5, in more detail, the UAV 10 circles around cell tower 20 at different heights capturing images (or video) of the antennae 30, 31, 32 in step S101 and acquires the BS information for each captured image in step S102. This results in a set of 2D images I_{1...K} and an associated set of radio spectrum indicators BS_{1...K}, see step S103.

In accordance with the third and fourth aspects of the invention,this data is subsequently sent to the server 40, which will extract a set of keypoints F for each image I_{K} and ultimately create a 3D representation of the antennae 30, 31, 32 captured by the images. However, in the present exemplifying embodiment, in accordance with the first and second aspects of the invention, all steps of Figure 5 are performed by the UAV 10.

As is well known in the art, the keypoints F may be represented by their spatial coordinates within the image and a corresponding local image descriptor D: F={x,y,D}. The descriptor D (a vector with a typical dimensionality of 64) captures local visual statistics in the vicinity of the keypoint, such as scale and orientation of the keypoint. Hence, the descriptor D determines how one keypoint (or a set of keypoints) should be matched to another.

However, in accordance with the invention, an improved descriptor D' is provided not only comprising the conventional descriptor D but further the frequency band information Bn of the antenna for which the image was captured: Dn' ={Dn, BSn}, where n denotes a number of the image being captured in a set of images.

Thus, assuming that a set of keypoints F1 of a first image I1 is to be matched to a set of keypoint F2 of a second image I2, the sets of keypoints F1, F2 being extracted from the respective image I1 and I2 in step S104.

In the art, the UAV 10 would thus make an attempt to match the first set of keypoints F1 of the first image I1 to the second set of keypoints F2 of the first image I2.

Now, if for the first set of keypoints F1 there is a sufficiently good match with the second set of keypoints F2 (using the corresponding descriptors D1 and D2 as guiding information to perform the matching), the first and second images I1, I2 would be considered to contain the same object, and areas in the images corresponding to the respective set of keypoints would be merged together, or combined, to create a 3D representation of the object (in practice a greater number of keypoints would have to be matched before a complete 3D representation of the object can be created.

In practice, the keypoint matching may have to satisfy a matching criteria, for instance that the two sets of keypoint should match each other to 80% for the match to be considered accurate enough. If not, the sets of keypoints are not considered to successfully match each other.

However, with the invention, the process will also take into account the frequency band information BSn of a particular image, which is included in the improved descriptor Dn' ={Dn, BSn}. That is, the improved descriptor Dn' further indicating the frequency band information BSn of a particular image.

In accordance with the invention, this is performed even before the actual matching of the first set of keypoints F1 and the second set of keypoints F2 is undertaken; if the BS information of the first image I1 does not match the BS information of the second image I2 as determined in step S105, the step of matching is not performed since the two images I1, I2 are indicated to render different antennas. Alternatively, in techniques not within the scope of the present invention, the matching may indeed be performed but if a check thereafter reveals that the BS information of the first image I1 does not match the BS information of the second image I2, the matching is considered obsolete (even if it is successful) and the keypoints will not serve as a basis for forming point clouds to create or update a 3D representation. Figure 5 illustrates the above-discussed step S105 in accordance with the present invention.

Hence, assuming that the first image I1 and the second image I2 has the same BS information associated with it, for instance BS1 = 713-723 MHz, or BS1 = 1 using the indexed version as determined with the check in step S105. If so, the first set of keypoints F1 and the second set of keypoints F2 indeed originate from images captured of the same object, namely the first antenna 30.

The first set of keypoints F1 are thus matched to the second set of keypoints F2 in step S106, and if the match is successful, i.e. the sets F1, F2 correspond to each other, the matching keypoints will serve as a basis for forming point clouds to create the 3D representation of the antenna 30 in step S107.

However, if on the other hand in step S105 BS1 = 713-723 MHz is associated with keypoints F1 and BS2 = 1910-1915 is associated with keypoints F2 (or BS1 = 1 and BS2 = 2 respectively using the indexed version) as indicated by the improved descriptor D' , the sets of keypoints F1, F2 do not originate from images captured of the same object, which has as an effect that no matching will be performed and thus no point clouds will be extracted.

Now, assuming that the first set of keypoints F1 indeed would have matched the second set of keypoints F2; if the check of step S105 would not have been performed, a false match would have occurred since BS1 indicates that the first set of keypoints F1 pertains to the first antenna 30, while BS2 indicates that the second set of keypoints F2 pertains to the second antenna 31.

Advantageously, in accordance with the invention a false match is avoided, which otherwise ultimately would have resulted in an incorrect 3D representation. Further, as can be concluded from Figure 5, if the BS information of one set of keypoints does not correspond to the BS information of another set of keypoints, the UAV 10 will in this embodiment not even attempt to perform the matching, which saves a huge amount of processing power.

Now, as previously described, in alternative techniques not within the scope of the present invention one could envisage that after the extraction of keypoints in step S104, the process continues directly to the matching step S106 and if there is a successful match, the checking of BS information (cf. step S105) is performed and if it is determined that there is correspondence in BS information for the matching sets of keypoints F1, F2, the 3D representation is created in step S107. This advantageously avoids false matches, but also performs the processing-heavy matching step S107 regardless of whether the BS information of different sets of keypoints corresponds or not.

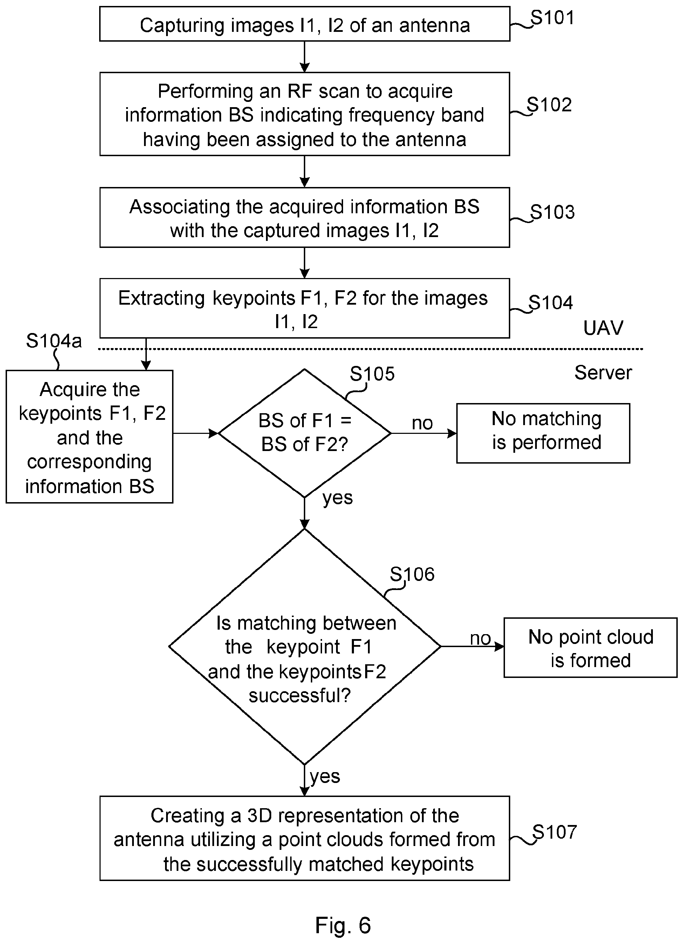

In Figure 5, the UAV 10 is illustrated to perform all steps S101-S107. However, in accordance with the third and fourth aspects of the invention, in a practical implementation with reference to Figure 6, the UAV 10 performs steps S101-S104. In step S104, the UAV 10 will in an embodiment extract keypoints for captured image using for instance visual-inertial simultaneous localization and mapping (VI-SLAM). The UAV 10 may also create the improved descriptor including the BS information: Dn' ={Dn, BSn}.

Thereafter, in step S104a, the UAV 10 transmits the extracted keypoints and the associated BS information to the server 40 using any appropriate means of communication such as wireless transmission, or by having the server 40 read a storage medium of the UAV 10 where all the extracted keypoints are stored along with the associated BS information. The BS information is provided to the server 40 from the UAV 10 in the form of the improved descriptor Dn' ={Dn, BSn}.

Then, the server 40 performs the determining in step S105 to see whether the BS information of two sets of keypoints to be matched corresponds or not. If so, the two sets of keypoints are matched in step S106 and if the match is successful, the server 40 creates a 3D representation of the first antenna 30 utilizing point clouds formed from the successfully matching keypoints.

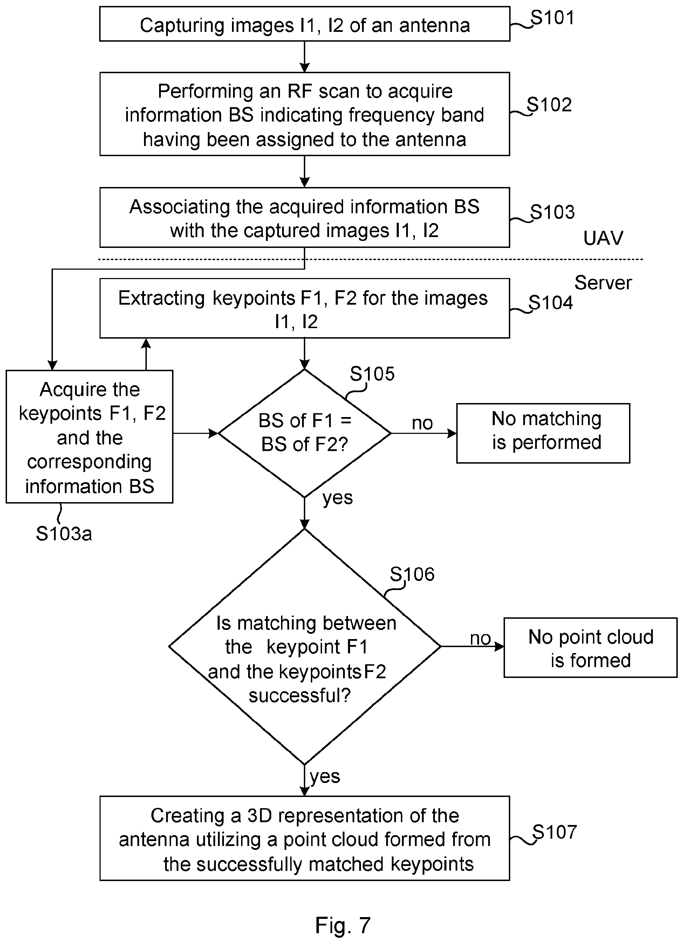

In another practical implementation with reference to Figure 7, it may be envisaged that the UAV 10 performs steps S101-S103. Thereafter, in step S103a, the UAV 10 transmits the images and the associated BS information to the server 40 using any appropriate means of communication such as wireless transmission, or by having the server 40 read a storage medium of the UAV 10 where all the captured images are stored along with the associated BS information.

Then, the server 40 extract keypoints in step S104 for the captured images (and possibly creates the improved descriptor Dn' ={Dn, BSn}).

Then, the server 40 performs the determining in step S105 to see whether the BS information of two sets of keypoints to be matched corresponds or not. If so, the two sets of keypoints are matched in step S106 and if the match is successful, the server 40 creates a 3D representation of the first antenna 30 utilizing point clouds formed from the successfully matching keypoints.

In an embodiment, a scenario is envisaged where when the UAV 10 captures images of the antennae 30, 31, 32 of for instance Figure 3, it may happen that the UAV will receive BS information (BS1, BS2, BS3) of all three antennae upon capturing an image and simultaneously performing an RF scan. It is noted that in practice tens of antennae may be placed close to each other at a cell tower, having as a consequence that a corresponding number of sets of BS information (BS1, ..., BS10) may be received in a single RF scan.

Thus, the BS information for a captured image may be a histogram BS_{HIST}(BS1-SS1, ..., BS10-SS10), where for each set of BS information received during the RF scan a corresponding signal strength (SS) is measured. When selecting a set of BS information to associated with the captured image, the UAV 10 may select the BS information for which the signal strength is the greatest since that is the antenna that the UAV 10 is most likely to be placed in front of when capturing the image.

The histogram BS_{HIST} may be included in the improved descriptor Dn' ={Dn, BS_{HIST}}). Again, the BS information for which the signal strength is the greatest would typically be used when utilizing the improved descriptor for matching sets of keypoints.

In an embodiment, visual information and RF information of the improved descriptor is weighted. Assuming that an improved descriptor not using weights has the appearance: D'={v1, v2, BS1, BS2}, where v1 and v2 denotes visual information while BS1 and BS2 denotes the RF information (i.e. the information indicating a frequency band of the telecommunication equipment).

If the visual information and the RF information of the improved descriptor is weighted, for instance with a factor 0.6 and 0.4, respectively, the improved descriptor has the appearance: D' ={0.6v1, 0.6v2, 0.4BS1, 0.4BS2}. When matching a first and a second keypoint, the vectors of the improved descriptor of the first keypoint are in practice subtracted from the vectors of the improved descriptor of the second keypoint, in order to assess the closeness of the two keypoints. If the two keypoints are considered close enough, a successful match has occurred.

Hence, with the weighting above, the visual information is given a higher contribution than the RF information in the keypoint matching. This could for instance be done if the weather is bright and clear. To the contrary, in case of for instance clouds or rain, a higher weight could be given to the RF information.

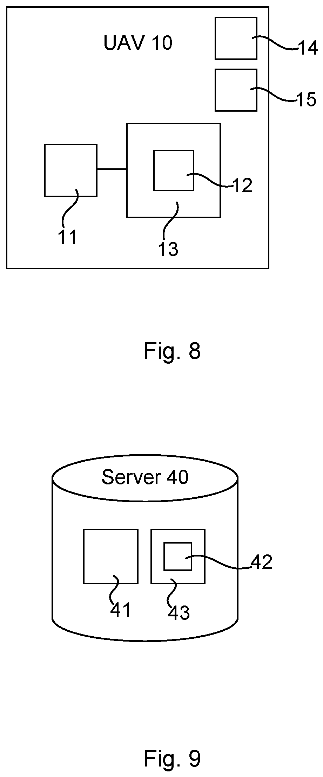

Figure 8 illustrates a device 10 configured to enable 3D modelling of telecommunication equipment according to an embodiment illustrated by a UAV. The steps of the method performed by the UAV 10 are in practice performed by a processing unit 11 embodied in the form of one or more microprocessors arranged to execute a computer program 12 downloaded to a suitable storage volatile medium 13 associated with the microprocessor, such as a Random Access Memory (RAM), or a non-volatile storage medium such as a Flash memory or a hard disk drive. The processing unit 11 is arranged to cause the UAV 10 to carry out the method according to embodiments when the appropriate computer program 12 comprising computer-executable instructions is downloaded to the storage medium 13 and executed by the processing unit 11. The storage medium 13 may also be a computer program product comprising the computer program 12. Alternatively, the computer program 12 may be transferred to the storage medium 13 by means of a suitable computer program product, such as a Digital Versatile Disc (DVD) or a memory stick. As a further alternative, the computer program 12 may be downloaded to the storage medium 13 over a network. The processing unit 11 may alternatively be embodied in the form of a digital signal processor (DSP), an application specific integrated circuit (ASIC), a field-programmable gate array (FPGA), a complex programmable logic device (CPLD), etc. The UAV 10 further comprises a camera 14 for acquitting visual representations of an object by capturing images or videos of the object, and a device such as a receiver or transceiver 15 capable of performing an RF scan of the object, the transceiver 15 possibly also being used for communicating with further devices, such as server 40.

Figure 9 illustrates a device 40 configured to perform 3D modelling of telecommunication equipment according to an embodiment illustrated by a server. The steps of the method performed by the server 40 are in practice performed by a processing unit 41 embodied in the form of one or more microprocessors arranged to execute a computer program 42 downloaded to a suitable storage volatile medium 43 associated with the microprocessor, such as a RAM, or a non-volatile storage medium such as a Flash memory or a hard disk drive. The processing unit 41 is arranged to cause the server 40 to carry out the method according to embodiments when the appropriate computer program 42 comprising computer-executable instructions is downloaded to the storage medium 43 and executed by the processing unit 41. The storage medium 43 may also be a computer program product comprising the computer program 42. Alternatively, the computer program 42 may be transferred to the storage medium 43 by means of a suitable computer program product, such as a DVD or a memory stick. As a further alternative, the computer program 42 may be downloaded to the storage medium 43 over a network. The processing unit 41 may alternatively be embodied in the form of a DSP, an ASIC, an FPGA, a CPLD, etc.

The aspects of the present disclosure have mainly been described above with reference to a few embodiments and examples thereof. However, as is readily appreciated by a person skilled in the art, other embodiments than the ones disclosed above are equally possible within the scope of the invention, as defined by the appended patent claims.

Thus, while various aspects and embodiments have been disclosed herein, other aspects and embodiments will be apparent to those skilled in the art. The various aspects and embodiments disclosed herein are for purposes of illustration and are not intended to be limiting, with the true scope being indicated by the following claims.

## Claims

1. A method performed by a device (10) of enabling three-dimensional, 3D, modelling of a telecommunication equipment (30), the method comprising:
acquiring (S101) visual representations of the telecommunication equipment (30), the visual representations comprising images captured by the device (10);
acquiring (S102), by performing a radio frequency scan of the telecommunication equipment (30) for each acquired visual representation, information indicating a frequency band over which the telecommunication equipment (30) communicates; and
associating (S103) the acquired information with the corresponding acquired visual representations;
extracting (S104) keypoints from each acquired visual representation; determining (S105) whether or not the acquired information associated with one of the acquired visual representations corresponds with the acquired information associated with another one of the acquired visual representations; and,
if the outcome of the determining (S105) is that the acquired information corresponds,
matching (S106) the keypoints extracted from said one of the acquired visual representations to the keypoints extracted from said another one of the acquired visual representations, the acquired
information being included in a keypoint descriptor utilized during the matching ; and if the matching is successful,
creating (S107) a 3D representation of said telecom equipment (30) or updating an existing 3D representation of said telecom equipment (30) utilizing a point cloud formed from the successfully matched keypoints; and,
if the outcome of the determining (S105) is that the acquired information does not correspond, not performing the step of matching (S106) the keypoints.

2. A method performed by a device (40) of performing three-dimensional, 3D, modelling of a telecommunication equipment (30), the method comprising:
acquiring (S104a), from a second device, keypoints having been extracted from acquired visual representations of the telecommunication equipment (30), the visual representations comprising images, and information indicating a frequency band over which the telecommunication equipment (30) communicates, said information having been acquired by performing a radio frequency scan of the telecommunication equipment (30) for each acquired visual representation, the acquired information having been associated with the corresponding acquired visual representations;
determining (S105) whether or not the acquired information associated with one of the acquired visual representations corresponds with the acquired information associated with another one of the acquired visual representations; and,
if the outcome of the determining (S105) is that the acquired information corresponds,
matching (S106) the keypoints extracted from said one of the acquired visual representations to the keypoints extracted from said another one of the acquired visual representations, the acquired information being included in a keypoint descriptor utilized during the matching;
and if the matching is successful creating (S107) a 3D representation of said telecom equipment (30) or updating an existing 3D representation of said telecom equipment (30) utilizing a point cloud formed from the successfully matching keypoints; and,
if the outcome of the determining (S105) is that the acquired information does not correspond, not performing the step of matching (S106) the keypoints.

3. A computer program (12) comprising computer-executable instructions for causing a device (10) to perform the steps recited in claim 1 when the computer-executable instructions are executed on a processing unit (11) included in the device (10).

4. A computer program (42) comprising computer-executable instructions for causing a device (40) to perform the steps recited in claim 2 when the computer-executable instructions are executed on a processing unit (41) included in the device (40).

5. A device (10) configured to enable three-dimensional, 3D, modelling of a telecommunication equipment (30), the device (10) comprising a camera (14), a radio frequency transceiver (15), a processing unit (11) and a memory (13), said memory containing instructions (12) executable by said processing unit (11), whereby the device (10) is operative to:
acquire, with the camera (14), visual representations of the telecommunication equipment (30), the visual representations comprising images captured by the camera (14) of the device (10);
acquire (S102), by using the radio frequency transceiver (15) to perform a radio frequency scan of the telecommunication equipment (30) for each acquired visual representation, information indicating a frequency band over which the telecommunication equipment (30) communicates;
associate (S103) the acquired information with the corresponding acquired visual representations;
extract keypoints from each acquired visual representation;
determine whether or not the acquired information associated with one of the acquired visual representations corresponds with the acquired information associated with another one of the acquired visual representations; and,
if it is determined that the acquired information corresponds, match the keypoints extracted from said one of the acquired visual representations to the keypoints extracted from said another one of the acquired visual representations, the acquired information being included in a keypoint descriptor utilized during the matching; and if the matching is successful create a 3D representation of said telecom equipment (30) or updating an existing 3D representation of said telecom equipment (30) utilizing point clouds formed from the successfully matching keypoints;
and, if it is determined that the acquired information does not correspond, do not match the keypoints.

6. The device (10) of claim 5, further being configured to:
provide, to another device (40), the acquired visual representations of the telecommunication equipment (30) and said associated information indicating the frequency band over which the telecommunication equipment (30) communicates.

7. The device (10) of claim 5, further being configured to:
provide, to another device (40), the extracted keypoints and said associated information indicating the frequency band over which the telecommunication equipment (30) communicates.

8. The device (10) of claim 5, the keypoint descriptor being configured such that one weight is given to visual information included in the keypoint descriptor while another weight is given to the information indicating the frequency band over which the telecommunication equipment (30) communicates being included in the keypoint descriptor.

9. The device (10) of any one of claims 5-8, further being configured to, in case sets of information indicating different frequency bands over which the telecommunication equipment (30) communicates is acquired when performing the radio frequency scan, select a set having a highest signal strength.

10. The device (10) of any one of claims 5-9, further being configured to, when being operative to associate:
associate information indicating a current pose of the device with respect to the telecommunication equipment with the acquired visual representation; and
align images taken from different device poses with each other before keypoints are extracted.

11. The device (10) of any one of claims 5-10, the radio frequency scan comprising a passive scan.

12. A device (40) configured to perform three-dimensional, 3D, modelling of a telecommunication equipment (30), the device (40) comprising a processing unit (41) and a memory (43), said memory containing instructions (42) executable by said processing unit (41), whereby the device (40) is operative to:
acquire, from a second device, keypoints having been extracted from acquired visual representations of the telecommunication equipment, the visual representations comprising images, and information indicating a frequency band over which the telecommunication equipment (30) communicates, said information having been acquired by performing a radio frequency scan of the telecommunication equipment (30) for each acquired visual representation, the acquired information having been associated with the corresponding acquired visual representations;
determine whether or not the acquired information associated with one of the acquired visual representations corresponds with the acquired information associated with another one of the acquired visual representations; and,
if it is determined that the acquired information corresponds,
match the keypoints extracted from said one of the acquired visual representations to the keypoints extracted from said another one of the acquired visual representations, the acquired information being included in a keypoint descriptor utilized during the matching;
and if the matching is successful create a 3D representation of said telecom equipment (30) or updating an existing 3D representation of said telecom equipment (30) utilizing a point cloud formed from the successfully matching keypoints;
and, if it is determined that the acquired information does not correspond, do not match the keypoints.

13. The device (40) of claim 12, further being configured to:
acquire visual representations of the telecommunication equipment (30), and for each acquired visual representation acquire information indicating a frequency band over which the telecommunication equipment (30) communicates, said information having been acquired by performing the radio frequency scan of the telecommunication equipment (30) for each acquired visual representation, and further when being operative to acquire keypoints to:
extract the keypoints from each acquired visual representation.

14. The device (40) of claims 12 or 13, the information indicating the frequency band over which the telecommunication equipment (30) communicates being included in a keypoint descriptor utilized during keypoint matching.

15. The device (40) of claim 14, the keypoint descriptor being configured such that one weight is given to visual information included in the keypoint descriptor while another weight is given to the information indicating the frequency band over which the telecommunication equipment (30) communicates being included in the keypoint descriptor.

## Patentansprüche

1. Verfahren, das von einer Vorrichtung (10) durchgeführt wird, zum Ermöglichen von dreidimensionaler, 3D-, Modellierung einer Telekommunikationsausrüstung (30), wobei das Verfahren umfasst:
Erfassen (S101) von visuellen Darstellungen der Telekommunikationsausrüstung (30), wobei die visuellen Darstellungen Bilder umfassen, die von der Vorrichtung (10) aufgenommen wurden;
Erfassen (S102) von Informationen, die ein Frequenzband angeben, über das die Telekommunikationsausrüstung (30) kommuniziert, durch Durchführen eines Hochfrequenzscans der Telekommunikationsausrüstung (30) für jede erfasste visuelle Darstellung; und
Zuordnen (S103) der erfassten Informationen zu den entsprechenden erfassten visuellen Darstellungen;
Extrahieren (S104) von Schlüsselpunkten aus jeder erfassten visuellen Darstellung;
Bestimmen (S105), ob die erfassten Informationen, die einer der erfassten visuellen Darstellungen zugeordnet sind, den erfassten Informationen, die einer anderen der erfassten visuellen Darstellungen zugeordnet sind, entsprechen oder nicht; und
wenn das Ergebnis des Bestimmens (S105) lautet, dass die erfassten Informationen einander entsprechen,
Abgleichen (S106) der Schlüsselpunkte, die aus der einen der erfassten visuellen Darstellungen extrahiert wurden, mit den Schlüsselpunkten, die aus der anderen der erfassten visuellen Darstellungen extrahiert wurden, wobei die erfassten Informationen in einem Schlüsselpunktdeskriptor beinhaltet sind, der während des Abgleichs verwendet wird; und wenn der Abgleich erfolgreich ist,
Erzeugen (S107) einer 3D-Darstellung der Telekommunikationsausrüstung (30) oder Aktualisieren einer bestehenden 3D-Darstellung der Telekommunikationsausrüstung (30) unter Verwendung einer Punktwolke, die aus den erfolgreich abgeglichenen Schlüsselpunkten gebildet wird; und
wenn das Ergebnis des Bestimmens (S105) lautet, dass die erfassten Informationen einander nicht entsprechen, Nichtdurchführen des Schrittes des Abgleichens (S106) der Schlüsselpunkte.

2. Verfahren, das von einer Vorrichtung (40) durchgeführt wird, zum Durchführen von dreidimensionaler, 3D-, Modellierung einer Telekommunikationsausrüstung (30), wobei das Verfahren umfasst:
Erfassen (S104a), von einer zweiten Vorrichtung, von Schlüsselpunkten, die aus erfassten visuellen Darstellungen der Telekommunikationsausrüstung (30) extrahiert wurden, wobei die visuellen Darstellungen Bilder umfassen, und von Informationen, die ein Frequenzband angeben, über das die Telekommunikationsausrüstung (30) kommuniziert, wobei die Informationen durch Durchführen eines Hochfrequenzscans der Telekommunikationsausrüstung (30) für jede erfasste visuelle Darstellung erfasst wurden, wobei die erfassten Informationen den entsprechenden erfassten visuellen Darstellungen zugeordnet wurden;
Bestimmen (S105), ob die erfassten Informationen, die einer der erfassten visuellen Darstellungen zugeordnet sind, den erfassten Informationen, die einer anderen der erfassten visuellen Darstellungen zugeordnet sind, entsprechen oder nicht; und
wenn das Ergebnis des Bestimmens (S105) lautet, dass die erfassten Informationen einander entsprechen,
Abgleichen (S106) der Schlüsselpunkte, die aus der einen der erfassten visuellen Darstellungen extrahiert wurden, mit den Schlüsselpunkten, die aus der anderen der erfassten visuellen Darstellungen extrahiert wurden, wobei die erfassten Informationen in einem Schlüsselpunktdeskriptor beinhaltet sind, der während des Abgleichs verwendet wird;
und wenn der Abgleich erfolgreich ist, Erzeugen (S107) einer 3D-Darstellung der Telekommunikationsausrüstung (30) oder Aktualisieren einer bestehenden 3D-Darstellung der Telekommunikationsausrüstung (30) unter Verwendung einer Punktwolke, die aus den erfolgreich abgeglichenen Schlüsselpunkten gebildet wird; und
wenn das Ergebnis des Bestimmens (S105) lautet, dass die erfassten Informationen einander nicht entsprechen, Nichtdurchführen des Schrittes des Abgleichens (S106) der Schlüsselpunkte.

3. Computerprogramm (12), das computerausführbare Anweisungen umfasst, um zu bewirken, dass eine Vorrichtung (10) die in Anspruch 1 benannten Schritte durchführt, wenn die computerausführbaren Anweisungen auf einer Verarbeitungseinheit (11), die in der Vorrichtung (10) beinhaltet ist, ausgeführt werden.

4. Computerprogramm (42), das computerausführbare Anweisungen umfasst, um zu bewirken, dass eine Vorrichtung (40) die in Anspruch 2 benannten Schritte durchführt, wenn die computerausführbaren Anweisungen auf einer Verarbeitungseinheit (41), die in der Vorrichtung (40) beinhaltet ist, ausgeführt werden.

5. Vorrichtung (10), die so konfiguriert ist, dass sie dreidimensionale, 3D-, Modellierung einer Telekommunikationsausrüstung (30) ermöglicht, wobei die Vorrichtung (10) eine Kamera (14), einen Hochfrequenz-Sender/Empfänger(15), eine Verarbeitungseinheit (11) und einen Speicher (13) umfasst, wobei der Speicher Anweisungen (12) enthält, die von der Verarbeitungseinheit (11) ausgeführt werden können, wodurch die Vorrichtung (10) so betrieben werden kann, dass sie:
mit der Kamera (14) visuelle Darstellungen der Telekommunikationsausrüstung (30) erfasst, wobei die visuellen Darstellungen Bilder umfassen, die von der Kamera (14) der Vorrichtung (10) aufgenommen wurden;
unter Verwendung des Hochfrequenz-Senders/Empfängers (15), um einen Hochfrequenzscan der Telekommunikationsausrüstung (30) für jede erfasste visuelle Darstellung durchzuführen, Informationen erfasst (S102), die ein Frequenzband angeben, über das die Telekommunikationsausrüstung (30) kommuniziert; und
die erfassten Informationen den entsprechenden erfassten visuellen Darstellungen zuordnet (S103);
aus jeder erfassten visuellen Darstellung Schlüsselpunkte extrahiert;
bestimmt, ob die erfassten Informationen, die einer der erfassten visuellen Darstellungen zugeordnet sind, den erfassten Informationen, die einer anderen der erfassten visuellen Darstellungen zugeordnet sind, entsprechen oder nicht; und
wenn bestimmt wird, dass die erfassten Informationen einander entsprechen, die Schlüsselpunkte, die aus der einen der erfassten visuellen Darstellungen extrahiert wurden, mit den Schlüsselpunkten abgleicht, die aus der anderen der erfassten visuellen Darstellungen extrahiert wurden, wobei die erfassten Informationen in einem Schlüsselpunktdeskriptor beinhaltet sind, der während des Abgleichs verwendet wird; und wenn der Abgleich erfolgreich ist,
eine 3D-Darstellung der Telekommunikationsausrüstung (30) erzeugt oder eine bestehende 3D-Darstellung der Telekommunikationsausrüstung (30) aktualisiert unter Verwendung von Punktwolken, die aus den erfolgreich abgeglichenen Schlüsselpunkten gebildet werden;
und wenn bestimmt wird, dass die erfassten Informationen einander nicht entsprechen, die Schlüsselpunkte nicht abgleicht.

6. Vorrichtung (10) nach Anspruch 5, die weiter so konfiguriert ist, dass sie:
die erfassten visuellen Darstellungen der Telekommunikationsausrüstung (30) und die zugeordneten Informationen, die das Frequenzband angeben, über das die Telekommunikationsausrüstung (30) kommuniziert, einer anderen Vorrichtung (40) bereitstellt.

7. Vorrichtung (10) nach Anspruch 5, die weiter so konfiguriert ist, dass sie:
die extrahierten Schlüsselpunkte und die zugeordneten Informationen, die das Frequenzband angeben, über das die Telekommunikationsausrüstung (30) kommuniziert, einer anderen Vorrichtung (40) bereitstellt.

8. Vorrichtung (10) nach Anspruch 5, wobei der Schlüsselpunktdeskriptor derart konfiguriert ist, dass den im Schlüsselpunktdeskriptor beinhalteten visuellen Informationen eine Gewichtung gegeben wird, während den im Schlüsselpunktdeskriptor beinhalteten Informationen, die das Frequenzband angeben, über das die Telekommunikationsausrüstung (30) kommuniziert, eine andere Gewichtung gegeben wird.

9. Vorrichtung (10) nach einem der Ansprüche 5-8, die weiter so konfiguriert ist, dass sie, falls beim Durchführen des Hochfrequenzscans Informationssätze erfasst werden, die unterschiedliche Frequenzbänder angeben, über die die Telekommunikationsausrüstung (30) kommuniziert, einen Satz auswählt, der die höchste Signalstärke aufweist.

10. Vorrichtung (10) nach einem der Ansprüche 5-9, die weiter so konfiguriert ist, dass sie, wenn sie so betrieben wird, dass sie zuordnet:
Informationen, die eine aktuelle Stellung der Vorrichtung in Bezug auf die Telekommunikationsausrüstung angeben, der erfassten visuellen Darstellung zuordnet; und
Bilder, die von unterschiedlichen Vorrichtungsstellungen aufgezeichnet wurden, miteinander ausrichtet, bevor Schlüsselpunkte extrahiert werden.

11. Vorrichtung (10) nach einem der Ansprüche 5-10, wobei der Hochfrequenzscan einen passiven Scan umfasst.

12. Vorrichtung (40), die so konfiguriert ist, dass sie dreidimensionale, 3D-, Modellierung einer Telekommunikationsausrüstung (30) durchführt, wobei die Vorrichtung (40) eine Verarbeitungseinheit (41) und einen Speicher (43) umfasst, wobei der Speicher Anweisungen (42) enthält, die von der Verarbeitungseinheit (41) ausgeführt werden können, wodurch die Vorrichtung (40) so betrieben werden kann, dass sie:
von einer zweiten Vorrichtung Schlüsselpunkte, die aus erfassten visuellen Darstellungen der Telekommunikationsausrüstung extrahiert wurden, wobei die visuellen Darstellungen Bilder umfassen, und Informationen erfasst, die ein Frequenzband angeben, über das die Telekommunikationsausrüstung (30) kommuniziert, wobei die Informationen durch Durchführen eines Hochfrequenzscans der Telekommunikationsausrüstung (30) für jede erfasste visuelle Darstellung erfasst wurden, wobei die erfassten Informationen den entsprechenden erfassten visuellen Darstellungen zugeordnet wurden;
bestimmt, ob die erfassten Informationen, die einer der erfassten visuellen Darstellungen zugeordnet sind, den erfassten Informationen, die einer anderen der erfassten visuellen Darstellungen zugeordnet sind, entsprechen oder nicht; und
wenn bestimmt wird, dass die erfassten Informationen einander entsprechen,
die Schlüsselpunkte, die aus der einen der erfassten visuellen Darstellungen extrahiert wurden, mit den Schlüsselpunkten abgleicht, die aus der anderen der erfassten visuellen Darstellungen extrahiert wurden, wobei die erfassten Informationen in einem Schlüsselpunktdeskriptor beinhaltet sind, der während des Abgleichs verwendet wird;
und wenn der Abgleich erfolgreich ist, eine 3D-Darstellung der Telekommunikationsausrüstung (30) oder Aktualisierung einer bestehenden 3D-Darstellung der Telekommunikationsausrüstung (30) unter Verwendung einer Punktwolke erzeugt, die aus den erfolgreich abgeglichenen Schlüsselpunkten gebildet wird;
und wenn bestimmt wird, dass die erfassten Informationen einander nicht entsprechen, die Schlüsselpunkte nicht abgleicht.

13. Vorrichtung (40) nach Anspruch 12, die weiter so konfiguriert ist, dass sie:
visuelle Darstellungen der Telekommunikationsausrüstung (30) erfasst und für jede erfasste visuelle Darstellung Informationen erfasst, die ein Frequenzband angeben, über das die Telekommunikationsausrüstung (30) kommuniziert, wobei die Informationen durch Durchführen des Hochfrequenzscans der Telekommunikationsausrüstung (30) für jede erfasste visuelle Darstellung erfasst wurden, und weiter, wenn sie so betrieben wird, dass sie Schlüsselpunkte erfasst:
die Schlüsselpunkte aus jeder erfassten visuellen Darstellung extrahiert.

14. Vorrichtung (40) nach den Ansprüchen 12 oder 13, wobei die Informationen, die das Frequenzband angeben, über das die Telekommunikationsausrüstung (30) kommuniziert, in einem Schlüsselpunktdeskriptor beinhaltet sind, der während des Schlüsselpunktabgleichs verwendet wird.

15. Vorrichtung (40) nach Anspruch 14, wobei der Schlüsselpunktdeskriptor derart konfiguriert ist, dass den im Schlüsselpunktdeskriptor beinhalteten visuellen Informationen eine Gewichtung gegeben wird, während den im Schlüsselpunktdeskriptor beinhalteten Informationen, die das Frequenzband angeben, über das die Telekommunikationsausrüstung (30) kommuniziert, eine andere Gewichtung gegeben wird.

## Revendications

1. Procédé réalisé par un dispositif (10) consistant à permettre une modélisation tridimensionnelle, 3D, d'un équipement de télécommunications (30), le procédé comprenant :
l'acquisition (S101) de représentations visuelles de l'équipement de télécommunications (30), les représentations visuelles comprenant des images capturées par le dispositif (10) ;
l'acquisition (S102), en réalisant un balayage de radiofréquence de l'équipement de télécommunications (30) pour chaque représentation visuelle acquise, d'informations indiquant une bande de fréquences sur laquelle l'équipement de télécommunications (30) communique ; et
l'association (S103) des informations acquises aux représentations visuelles acquises correspondantes ;
l'extraction (S104) de points clés de chaque représentation visuelle acquise ;
la détermination (S105) si les informations acquises associées à l'une des représentations visuelles acquises correspondent ou non aux informations acquises associées à une autre des représentations visuelles acquises ; et,
si le résultat de la détermination (S105) est que les informations acquises correspondent,
le rapprochement (S106) des points clés extraits de ladite une des représentations visuelles acquises et des points clés extraits de ladite autre des représentations visuelles acquises, les informations acquises étant incluses dans un descripteur de points clés utilisé pendant le rapprochement ; et si le rapprochement est réussi,
la création (S107) d'une représentation 3D dudit équipement de télécommunications (30) ou la mise à jour d'une représentation 3D existante dudit équipement de télécommunications (30) en utilisant un nuage de points formé à partir des points clés rapprochés avec succès ; et,
si le résultat de la détermination (S105) est que les informations acquises ne correspondent pas, la non-réalisation de l'étape de rapprochement (S106) des points clés.

2. Procédé réalisé par un dispositif (40) consistant à réaliser une modélisation tridimensionnelle, 3D, d'un équipement de télécommunications (30), le procédé comprenant :
l'acquisition (S104a), à partir d'un second dispositif, de points clés ayant été extraits de représentations visuelles acquises de l'équipement de télécommunications (30), les représentations visuelles comprenant des images, et d'informations indiquant une bande de fréquences sur laquelle l'équipement de télécommunications (30) communique, lesdites informations ayant été acquises en réalisant un balayage de radiofréquence de l'équipement de télécommunications (30) pour chaque représentation visuelle acquise, les informations acquises ayant été associées aux représentations visuelles acquises correspondantes;
la détermination (S105) si les informations acquises associées à l'une des représentations visuelles acquises correspondent ou non aux informations acquises associées à une autre des représentations visuelles acquises ; et,
si le résultat de la détermination (S105) est que les informations acquises correspondent,
le rapprochement (S106) des points clés extraits de ladite une des représentations visuelles acquises et des points clés extraits de ladite autre des représentations visuelles acquises, les informations acquises étant incluses dans un descripteur de points clés utilisé pendant le rapprochement ;
et si le rapprochement est réussi, la création (S107) d'une représentation 3D dudit équipement de télécommunications (30) ou la mise à jour d'une représentation 3D existante dudit équipement de télécommunications (30) en utilisant un nuage de points formé à partir des points clés rapprochés avec succès ; et,
si le résultat de la détermination (S105) est que les informations acquises ne correspondent pas, la non-réalisation de l'étape de rapprochement (S106) des points clés.

3. Programme informatique (12) comprenant des instructions exécutables par ordinateur pour amener un dispositif (10) à réaliser les étapes selon la revendication 1 lorsque les instructions exécutables par ordinateur sont exécutées sur une unité de traitement (11) incluse dans le dispositif (10).

4. Programme informatique (42) comprenant des instructions exécutables par ordinateur pour amener un dispositif (40) à réaliser les étapes selon la revendication 2 lorsque les instructions exécutables par ordinateur sont exécutées sur une unité de traitement (41) incluse dans le dispositif (40).

5. Dispositif (10) configuré pour permettre une modélisation tridimensionnelle, 3D, d'un équipement de télécommunications (30), le dispositif (10) comprenant une caméra (14), un émetteur-récepteur radiofréquence (15), une unité de traitement (11) et une mémoire (13), ladite mémoire contenant des instructions (12) exécutables par ladite unité de traitement (11), selon lesquelles le dispositif (10) est fonctionnel pour :
acquérir, avec la caméra (14), des représentations visuelles de l'équipement de télécommunications (30), les représentations visuelles comprenant des images capturées par la caméra (14) du dispositif (10) ;
acquérir (S102), à l'aide de l'émetteur-récepteur radiofréquence (15) pour réaliser un balayage de radiofréquence de l'équipement de télécommunications (30) pour chaque représentation visuelle acquise, des informations indiquant une bande de fréquences sur laquelle l'équipement de télécommunications (30) communique ;
associer (S103) les informations acquises aux représentations visuelles acquises correspondantes;
extraire des points clés de chaque représentation visuelle acquise ;
déterminer si les informations acquises associées à l'une des représentations visuelles acquises correspondent ou non aux informations acquises associées à une autre des représentations visuelles acquises ; et,
s'il est déterminé que les informations acquises correspondent, rapprocher les points clés extraits de ladite une des représentations visuelles acquises et les points clés extraits de ladite autre des représentations visuelles acquises, les informations acquises étant incluses dans un descripteur de points clés utilisé pendant le rapprochement ; et si le rapprochement est réussi
créer une représentation 3D dudit équipement de télécommunications (30) ou mettre à jour une représentation 3D existante dudit équipement de télécommunications (30) en utilisant des nuages de points formés à partir des points clés rapprochés avec succès ;
et, s'il est déterminé que les informations acquises ne correspondent pas, ne pas rapprocher les points clés.

6. Dispositif (10) selon la revendication 5, en outre configuré pour :
fournir, à un autre dispositif (40), les représentations visuelles acquises de l'équipement de télécommunications (30) et lesdites informations associées indiquant la bande de fréquences sur laquelle l'équipement de télécommunications (30) communique.

7. Dispositif (10) selon la revendication 5, en outre configuré pour :
fournir, à un autre dispositif (40), les points clés extraits et lesdites informations associées indiquant la bande de fréquences sur laquelle l'équipement de télécommunications (30) communique.

8. Dispositif (10) selon la revendication 5, le descripteur de points clés étant configuré de telle sorte qu'un poids soit attribué à des informations visuelles incluses dans le descripteur de points clés tandis qu'un autre poids est attribué aux informations indiquant la bande de fréquences sur laquelle l'équipement de télécommunications (30) communique étant incluses dans le descripteur de points clés.

9. Dispositif (10) selon l'une quelconque des revendications 5-8, en outre configuré pour, dans le cas où des ensembles d'informations indiquant différentes bandes de fréquences sur lesquelles l'équipement de télécommunications (30) communique sont acquis lors de la réalisation du balayage de radiofréquence, sélectionner un ensemble présentant une intensité de signal la plus élevée.

10. Dispositif (10) selon l'une quelconque des revendications 5-9, en outre configuré pour, lorsqu'il est fonctionnel pour associer :
associer des informations indiquant une pose courante du dispositif par rapport à l'équipement de télécommunications à la représentation visuelle acquise ; et
aligner des images prises à partir de différentes poses de dispositif les unes sur les autres avant que des points clés ne soient extraits.

11. Dispositif (10) selon l'une quelconque des revendications 5-10, le balayage de radiofréquence comprenant un balayage passif.

12. Dispositif (40) configuré pour réaliser une modélisation tridimensionnelle, 3D, d'un équipement de télécommunications (30), le dispositif (40) comprenant une unité de traitement (41) et une mémoire (43), ladite mémoire contenant des instructions (42) exécutables par ladite unité de traitement (41), selon lesquelles le dispositif (40) est fonctionnel pour :
acquérir, à partir d'un second dispositif, des points clés ayant été extraits de représentations visuelles acquises de l'équipement de télécommunications, les représentations visuelles comprenant des images, et des informations indiquant une bande de fréquences sur laquelle l'équipement de télécommunications (30) communique, lesdites informations ayant été acquises en réalisant un balayage de radiofréquence de l'équipement de télécommunications (30) pour chaque représentation visuelle acquise, les informations acquises ayant été associées aux représentations visuelles acquises correspondantes ;
déterminer si les informations acquises associées à l'une des représentations visuelles acquises correspondent ou non aux informations acquises associées à une autre des représentations visuelles acquises ; et,
s'il est déterminé que les informations acquises correspondent,
rapprocher les points clés extraits de ladite une des représentations visuelles acquises et les points clés extraits de ladite autre des représentations visuelles acquises, les informations acquises étant incluses dans un descripteur de points clés utilisé pendant le rapprochement ;
et, si le rapprochement est réussi, créer une représentation 3D dudit équipement de télécommunications (30) ou mettre à jour une représentation 3D existante dudit équipement de télécommunications (30) en utilisant un nuage de points formé à partir des points clés rapprochés avec succès ;
et, s'il est déterminé que les informations acquises ne correspondent pas, ne pas rapprocher les points clés.

13. Dispositif (40) selon la revendication 12, en outre configuré pour :
acquérir des représentations visuelles de l'équipement de télécommunications (30) et, pour chaque représentation visuelle acquise, acquérir des informations indiquant une bande de fréquences sur laquelle l'équipement de télécommunications (30) communique, lesdites informations ayant été acquises en réalisant le balayage de radiofréquence de l'équipement de télécommunications (30) pour chaque représentation visuelle acquise et, en outre lorsqu'il est fonctionnel pour acquérir des points clés :
extraire les points clés de chaque représentation visuelle acquise.

14. Dispositif (40) selon la revendication 12 ou 13, les informations indiquant la bande de fréquences sur laquelle l'équipement de télécommunications (30) communique étant incluses dans un descripteur de points clés utilisé pendant le rapprochement de points clés.

15. Dispositif (40) selon la revendication 14, le descripteur de points clés étant configuré de telle sorte qu'un poids soit attribué à des informations visuelles incluses dans le descripteur de points clés tandis qu'un autre poids est attribué aux informations indiquant la bande de fréquences sur laquelle l'équipement de télécommunications (30) communique étant incluses dans le descripteur de points clés.
